# EUROPÄISCHE PATENTSCHRIFT

(11) **EP 3 189 242 B1**
(45) Veröffentlichungstag und Bekanntmachung des Hinweises auf die Patenterteilung: **05.08.2020**
(21) Anmeldenummer: 15744109.8
(22) Anmeldetag: 16.06.2015
(51) Int. Cl.: F16C 19/52, F16C 41/00

(54) **WÄLZLAGER MIT EINER ELEKTRISCHEN SCHALTUNG SOWIE HERSTELLUNGSVERFAHREN EINER ELEKTRISCHEN SCHALTUNG FÜR EIN WÄLZLAGER**
ROLLING BEARING COMPRISING AN ELECTRIC CIRCUIT, AND METHOD FOR PRODUCING AN ELECTRIC CIRCUIT FOR A ROLLING BEARING
PALIER À ROULEMENT POURVU D'UN CIRCUIT ÉLECTRIQUE ET PROCÉDÉ DE FABRICATION D'UN CIRCUIT ÉLECTRIQUE POUR UN PALIER À ROULEMENT

(30) Priorität: 05.09.2014 DE 102014217787
(43) Veröffentlichungstag der Anmeldung: 12.07.2017
(73) Patentinhaber: Schaeffler Technologies AG & Co. KG, 91074 Herzogenaurach (DE)
(72) Erfinder: SCHIFFLER, Andreas, 91074 Herzogenaurach (DE); GIERL, Jürgen, 91052 Erlangen (DE); HEIM, Jens, 97493 Bergrheinfeld (DE)
(86) Internationale Anmeldenummer: PCT/DE2015/200369
(87) Internationale Veröffentlichungsnummer: WO 2016/034174

(56) Entgegenhaltungen:
- WO-A1-2004/070337
- WO-A2-97/07585
- DE-A1-102010 004 853
- US-A- 5 585 577
- US-A1- 2002 054 719
- US-A1- 2010 074 567

## Beschreibung

Die vorliegende Erfindung betrifft ein Wälzlager mit einer elektrischen Schaltung.

Die Erfindung betrifft ferner ein Herstellungsverfahren einer elektrischen Schaltung auf zumindest einem Oberflächenabschnitt eines Wälzlagers.

Allgemein werden für elektrische Schaltungen hauptsächlich Schaltungsträger mit einem elektrischen Metallkern verwendet, wie hinreichend im Stand der Technik offenbart.

Derartige Schaltungsträger finden in diversen Gebieten Anwendung, so auch bei Wälzlagern, wie beispielsweise in der US-amerikanischen Offenlegungsschrift US 2002 054 719 A1 beschrieben. Nachteilig ist jedoch, dass bisher bekannte Schaltungsträger viel Bauraum im Wälzlager beanspruchen.

WO 2004/070337 A1 offenbart ein Wälzlager mit den Merkmalen nach dem Oberbegriff des Anspruchs 1.

Eine Aufgabe der gegenwärtigen Erfindung ist daher, ein kostengünstiges Wälzlager mit einer elektrischen Schaltung anzugeben, bei dem die elektrische Schaltung minimalen Bauraum im oder am Wälzlager beansprucht und gleichzeitig vor Umwelteinflüssen im Betrieb geschützt ist.

Diese Aufgabe wird durch ein Wälzlager mit einer elektrischen Schaltung gelöst, das die Merkmale des Anspruchs 1 umfasst.

Eine weitere Aufgabe der gegenwärtigen Erfindung ist, ein kostengünstiges Herstellungsverfahren einer elektrischen Schaltung auf zumindest einem Oberflächenabschnitt eines Wälzlagers anzugeben, bei dem die elektrische Schaltung minimalen Bauraum im oder am Wälzlager beanspruchen wird. Gleichzeitig wird die elektrische Schaltung im Betrieb des Wälzlagers vor Umwelteinflüssen geschützt.

Diese Aufgabe wird durch ein Herstellungsverfahren einer elektrischen Schaltung für ein Wälzlagers gelöst, das die Merkmale des Anspruchs 3 umfasst.

Bei dem erfindungsgemäßen Wälzlager mit einer elektrischen Schaltung ist erfindungsgemäß eine erste elektrisch isolierende Schicht direkt auf zumindest einem Oberflächenabschnitt des Wälzlagers aufgebracht. Über der ersten elektrisch isolierenden ist eine erste elektrisch leitfähige Schicht vorgesehen, die mehrere Leiterbahnen mit Kontaktstellen zur elektrischen Kontaktierung von elektrischen Bauelementen ausgebildet hat. Dabei ist wesentlich, dass der Oberflächenabschnitt des Wälzlagers an sich ein elektrisch leitender Werkstoff ist. Der Oberflächenabschnitt des Wälzlagers und damit alle darauf aufbauenden Schichten können dadurch beliebig im dreidimensionalen Raum ausgeformt sein. Zudem ist anzumerken, dass beide auf das Wälzlager aufgebrachten Schichten durch beliebige aus dem Stand der Technik bekannte Beschichtungsverfahren aufgebracht werden können.

In einer ersten Ausführungsform der Erfindung sind die elektrischen Bauelemente passive elektrische Bauelemente. Ebenso sieht eine weitere Ausführungsform des erfindungsgemäßen Wälzlagers vor, dass die elektrischen Bauelemente elektronische Bauelemente sind. In einer bevorzugten Ausführungsform der Erfindung sind jedoch sowohl die passiven elektrischen Bauelemente als auch die elektronischen Bauelemente als elektrische Bauelemente vorgesehen, die allesamt gemäß den aus dem Stand der Technik bekannten Verfahren auf den Kontaktstellen befestigt und kontaktiert sind.

Erfindungsgemäß ist mindestens eine zweite elektrisch isolierende Schicht direkt auf dem zumindest einem Oberflächenabschnitt des Wälzlagers aufgebracht, die mindestens eine zweite elektrisch leitfähige und strukturierte Schicht trägt. Auf dieser mindestens einen zweiten elektrisch leitfähigen und strukturierten Schicht sind dann die erste elektrisch isolierende Schicht und die erste elektrisch leitfähige Schicht mit den Leiterbahnen und den Kontaktstellen aufgebracht. Somit ist eine multiple Ebene von Schichten möglich (multi layer). Dabei entsprechen dann aber stets die mindestens eine zweite elektrisch isolierende Schicht und die mindestens eine zweite elektrisch leitfähige und strukturierte Schicht zusammen mit dem Wälzlager einer Dünnschicht-Sensorik. So erfüllt die mindestens eine zweite elektrisch isolierende Schicht eine Schutzfunktion der mindestens einen zweiten elektrisch leitfähigen und strukturierten Schicht gegenüber Partikeln und Flüssigkeiten.

Erfindungsgemäß ist vorgesehen, dass die erste elektrisch isolierende Schicht an mindestens einer Stelle, bis auf ein Oberflächenabschnitt der mindestens zweiten elektrisch leitfähigen Schicht, strukturiert ist. An dieser mindestens einen Stelle ist mindestens eine elektrische Kontaktierung vorgesehen, die die mindestens zweite elektrisch leitfähige Leitschicht mit mindestens einer elektrischer Leiterbahn bzw. einer Kontaktstelle der ersten leitfähigen Schicht verbindet. Für die elektrische Kontaktierung kann ein beliebiges Verfahren zur Herstellung der elektrischen Verbindung verwendet werden. Im speziellen erfolgt diese durch die Nutzung eines elektrisch adhäsiven Polymer-Metall-Verbunds, wie beispielsweise einem Leitkleber.

Das erfindungsgemäße Herstellungsverfahren einer elektrischen Schaltung auf zumindest einem Oberflächenabschnitt eines Wälzlagers ist durch die folgenden Schritte gekennzeichnet: In einem ersten Schritt wird eine erste elektrisch isolierende Schicht auf dem Oberflächenabschnitt des Wälzlagers ausgebildet. Anschließend wird eine erste elektrisch leitfähige Schicht auf der ersten elektrisch isolierenden Schicht ausgebildet. Ein weiterer Verfahrensschritt sieht dann vor, dass die erste elektrisch leitfähige Schicht strukturiert wird, so dass Leiterbahnen in der der ersten elektrisch leitfähigen Schicht ausgebildet werden. Abschließend werden dann auf den Leiterbahnen Kontaktstellen ausgebildet.

Vorzugsweise wird bei dem erfindungsgemäßen Herstellungsverfahren die erste elektrisch isolierende Schicht und die erste elektrisch leitfähige Schicht mittels einer elektrostatischen Pulverbeschichtung aufgebracht, wobei aber auch andere aus dem Stand der Technik bekannte Beschichtungsverfahren angewandt werden können.

Erfindungsgemäß sieht das Herstellungsverfahrens vor, dass vor dem Ausbilden der ersten elektrisch isolierenden Schicht und der ersten elektrisch leitfähigen Schicht auf zumindest einem Oberflächenabschnitt des Wälzlagers mindestens eine zweite elektrisch isolierende Schicht aufgebracht wird, auf der eine mindestens zweite elektrisch leitfähige und strukturierte Schicht vorgesehen wird. Vorteile einer durch dieses Herstellungsverfahren gebildeten elektrischen Schaltung sind bereits zum Wälzlager beschrieben, so dass hier nicht erneut auf die geschaffene Schutzfunktion gegenüber Umwelteinflüssen, wie Partikel, Flüssigkeiten, etc. eingegangen wird.

Erfindungsgemäß erfolgt das Herstellungsverfahrens in der Art, dass die erste elektrisch isolierende Schicht an mindestens einer Stelle, bis auf ein Oberflächenabschnitt, der mindestens zweiten elektrisch leitfähigen Schicht strukturiert wird, so dass mindestens eine elektrische Kontaktierung vorgesehen ist, durch die die mindestens zweite elektrisch leitfähige Schicht mit mindestens einer elektrischer Leiterbahn bzw. einer Kontaktstelle der ersten leitfähigen Schicht verbunden wird.

Ferner ist vorgesehen, dass über die Kontaktstellen der Leiterbahnen der ersten Leitschicht passive elektrische Bauelemente und/oder elektronische Bauelemente gemäß bekannter Methoden und Prozesse aus dem Stand der Technik befestigt werden können. Entsprechend können diese Methoden auch für die Kontaktierungen angewandt werden.

Durch die auf das Wälzlager direkt aufzutragenden Schichten, spart die dadurch gebildete erfindungsgemäße elektrische Schaltung Bauraum im und/oder am Wälzlager ein. Gegenüber dem Stand der Technik kann auf einen separaten Schaltungsträger verzichtet werden. Dies hat den Vorteil, dass über die Schichten auf zumindest einem Oberflächenabschnitt eine sichere und dauerhafte Verbindung der Schaltung und dem Wälzlager gegeben ist. Da ferner viele einzelne Verfahrensschritte zur Schaffung der erfindungsgemäßen elektrischen Schaltung bekannt sind, können diese kostengünstig durchgeführt werden, so dass sich dieses auch wiederum kostengünstig auf die Erfindung auswirkt. Zudem ermöglichen mehrere auf das Wälzlager aufzubringenden Schichten, dass eine Schutzfunktion für sensorische Oberflächen gegenüber Umwelteinflüssen mittels der Erfindung geschaffen ist.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: eine schematische Seitenansicht eines Teils einer ersten Ausführungsform des erfindungsgemäßen Wälzlagers mit einer elektrischen Schaltung;
- Fig. 2: eine schematische Seitenansicht eines Teils des Wälzlagers mit einer weiteren Ausführungsform einer mit dem Wälzlager verbundenen elektrischen Schaltung;
- Fig. 3: eine Perspektivansicht eines Wälzlagers mit einer auf einen Oberflächenabschnitt des Wälzlagers hergestellten elektrischen Schaltung;
- Fig. 4: eine schematische Seitenansicht eines Teils des Wälzlagers mit einer weiteren Ausführungsform einer mit dem Wälzlager verbundenen elektrischen Schaltung; und
- Fig. 5: einen vergrößerten Detailausschnitt des in Fig. 4 mit D gekennzeichneten Bereichs.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Wälzlager mit einer elektrischen Schaltung sowie das erfindungsgemäße Herstellungsverfahren einer elektrischen Schaltung für ein Wälzlager ausgestaltet sein können und stellen somit keine abschließende Begrenzung der Erfindung dar.

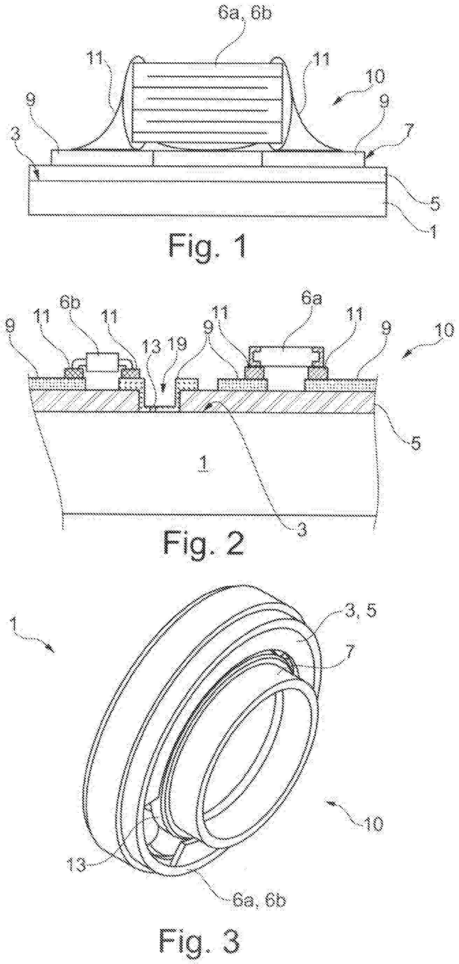

**Figur 1** zeigt eine schematische Seitenansicht eines Teils einer ersten Ausführungsform des erfindungsgemäßen Wälzlagers 1 mit einer elektrischen Schaltung 10.

Gemäß dieser ersten Ausführungsform der Erfindung ist eine erste elektrisch isolierende Schicht 5 direkt auf zumindest einem Oberflächenabschnitt 3 des Wälzlagers 1 aufgebracht. In **Figur 3** ist ein Wälzlager 1 in der Perspektivansicht dargestellt. Der Oberflächenabschnitt 3 des Wälzlagers 1 ist hier beispielsweise eine metallische Dichtscheibe 3, auf der in zumindest einem Abschnitt die erste elektrisch isolierende Schicht 5 aufgebracht ist. Wie in Figur 1 ferner dargestellt ist, ist über der ersten elektrisch isolierenden Schicht 5 eine erste elektrisch leitfähige Schicht 7 vorgesehen, die mehrere Leiterbahnen 9 mit Kontaktstellen 11 zur elektrischen Kontaktierung von elektrischen Bauelementen 6a, 6b ausgebildet hat. Die erste elektrisch isolierende Schicht 5 ist vorzugsweise durch eine Pulverbeschichtung auf den Oberflächenabschnitt 3 aufgebracht. Die erste elektrisch leitfähige Schicht 7 ist dann mittels einer elektrochemischen Metallisierung auf die erste elektrisch isolierende Schicht 5 aufgebracht.

Der Aufbau und die Verbindungstechniken der elektrischen Bauelementen 6a, 6b erfolgt entsprechend dem aus dem Stand der Technik bekannten Verfahren für eine Befestigung von Komponenten an Oberflächen.

**Figur 2** zeigt eine schematische Seitenansicht eines Teils des Wälzlagers 1 mit einer weiteren Ausführungsform einer mit dem Wälzlager 1 verbundenen elektrischen Schaltung 10.

Vorzugsweise ist hier die erste elektrisch isolierende Schicht 5 an einer Stelle 19, bis auf der Oberflächenabschnitt 3 des Wälzlagers 1, strukturiert. An dieser Stelle 19 ist ein elektrisches Kontaktierungselement 13 ausgebildet, so dass die elektrisch leitfähige Schicht 7 mit dem Wälzlager 1 elektrisch leitend verbunden ist. Ferner ist hier gezeigt, dass die elektrische Schaltung 10 als elektrische Bauelemente vorzugsweise sowohl passive elektrische Bauelemente 6a als auch elektronische Bauelemente 6b auf den Kontaktstellen 11 der Leiterbahnen 9 besitzt.

**Figur 3** zeigt eine Perspektivansicht einer auf einen Oberflächenabschnitt 3 des Wälzlagers 1 hergestellten elektrischen Schaltung 10, die bereits zu Fig. 1 beschrieben ist. Anzumerken ist hier jedoch noch, dass auch der gegenüberliegende Oberflächenabschnitt 3 der Dichtscheibe des Wälzlagers 1 ebenfalls mit einer elektrischen Schaltung 10 ausgebildet sein kann.

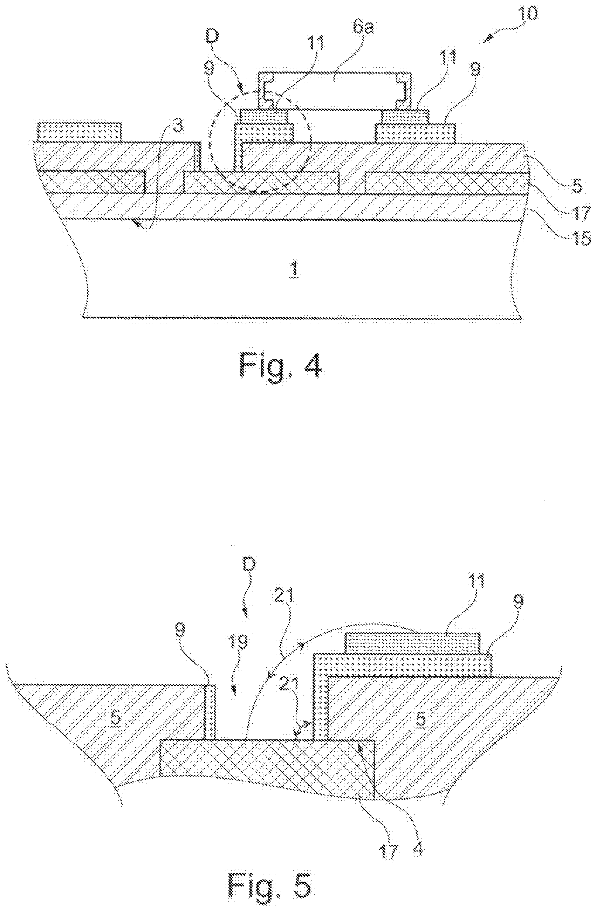

**Figur 4** zeigt eine schematische Seitenansicht eines Teils des Wälzlagers 1 mit einer weiteren Ausführungsform einer mit dem Wälzlager 1 verbundenen elektrischen Schaltung 10.

Gemäß dieser Ausführungsform ist eine zweite elektrisch isolierende Schicht 15 direkt auf dem zumindest einem Oberflächenabschnitt 3 des Wälzlagers 1 aufgebracht. Die zweite elektrisch isolierende Schicht 15 trägt hier eine zweite elektrisch leitfähige und strukturierte Schicht 17, auf der die erste elektrisch isolierende Schicht 5 und die erste elektrisch leitfähige Schicht 7 mit den Leiterbahnen 9 und den Kontaktstellen 11 aufgebracht sind.

Durch diese Ausführungsform ist gewährleistet, dass die zweite elektrisch isolierende Schicht 15 eine Schutzfunktion der zweiten elektrisch leitfähigen und strukturierten Schicht 17 gegenüber Partikeln und Flüssigkeiten übernimmt.

**Figur 5** zeigt einen vergrößerten Detailausschnitt des in Fig. 4 mit D gekennzeichneten Bereichs.

Wie hier dargestellt, ist die erste elektrisch isolierende Schicht 5 an einer Stelle 19, bis auf ein Oberflächenabschnitt 4 der zweiten elektrisch leitfähigen Schicht 17, strukturiert. An dieser Stelle 19 sind zwei elektrische Kontaktierungen 21 vorgesehen, die die zweite elektrisch leitfähige Leitschicht 17 mit einer elektrischer Leiterbahn 9 und einer Kontaktstelle 11 der ersten leitfähigen Schicht 7 verbinden.

### Bezugszeichenliste

- 1: Wälzlager
- 3: Oberflächenabschnitt des Wälzlagers
- 4: Oberflächenabschnitt der zweiten elektrisch leitfähigen Schicht
- 5: erste elektrisch isolierende Schicht
- 6a: passives elektrisches Bauelement
- 6b: elektronisches Bauelemente
- 7: erste elektrisch leitfähige Schicht
- 9: Leiterbahn
- 10: Schaltung
- 11: Kontaktstelle
- 13: Kontaktierungselement
- 15: zweite elektrisch isolierende Schicht
- 17: zweite elektrisch leitfähige und strukturierte Schicht
- 19: erste Stelle der elektrisch isolierenden Schicht
- 21: elektrische Kontaktierung

## Patentansprüche

1. Wälzlager (1), mit einer elektrischen Schaltung (10),
wobei eine erste elektrisch isolierende Schicht (5) direkt auf zumindest einem Oberflächenabschnitt (3) des Wälzlagers (1) aufgebracht ist, wobei der Oberflächenabschnitt (3) des Wälzlagers (1) aus einem elektrisch leitenden Werkstoff gebildet ist, wobei eine erste elektrisch leitfähige Schicht (7) über der ersten elektrisch isolierenden Schicht (5) vorgesehen ist und mehrere Leiterbahnen (9) mit Kontaktstellen (11) zur elektrischen Kontaktierung von elektrischen Bauelementen (6a, 6b) ausgebildet hat,
**dadurch gekennzeichnet, dass**
mindestens eine zweite elektrisch isolierende Schicht (15) direkt auf dem zumindest einem Oberflächenabschnitt (3) des Wälzlagers (1) aufgebracht ist und mindestens eine zweite elektrisch leitfähige und strukturierte Schicht (17) trägt, auf der die erste elektrisch isolierende Schicht (5) und die erste elektrisch leitfähige Schicht (7) mit den Leiterbahnen (9) und den Kontaktstellen (11) aufgebracht sind, und dass die erste elektrisch isolierende Schicht (5) an mindestens einer Stelle (19), bis auf ein Oberflächenabschnitt (4) der mindestens zweiten elektrisch leitfähigen Schicht (17), strukturiert ist und mindestens eine elektrische Kontaktierung (21) vorgesehen ist, die die mindestens zweite elektrisch leitfähige Leitschicht (17) mit mindestens einer elektrischer Leiterbahn (9) bzw. einer Kontaktstelle (11) der ersten leitfähigen Schicht (7) verbindet.

2. Wälzlager (1) nach Anspruch 1, wobei die elektrischen Bauelemente passive elektrische Bauelemente (6a) und/oder elektronische Bauelemente (6b) sind.

3. Herstellungsverfahren einer elektrischen Schaltung (10) auf zumindest einem Oberflächenabschnitt (3) eines Wälzlagers (1), wobei der Oberflächenabschnitt (3) des Wälzlagers (1) aus einem elektrisch leitenden Werkstoff gebildet ist,
umfassend folgende Schritte:
• Ausbilden einer ersten elektrisch isolierenden Schicht (5) auf dem Oberflächenabschnitt (3) des Wälzlagers (1);
• Ausbilden einer ersten elektrisch leitfähigen Schicht (7) auf der ersten elektrisch isolierenden Schicht (5);
• Strukturieren der ersten elektrisch leitfähigen Schicht (7), so dass Leiterbahnen (9) in der der ersten elektrisch leitfähigen Schicht (7) ausgebildet werden; und
• Ausbilden von Kontaktstellen (11) auf den Leiterbahnen (9)
**dadurch gekennzeichnet, dass**
vor dem Ausbilden der ersten elektrisch isolierenden Schicht (5) und der ersten elektrisch leitfähigen Schicht (7) auf zumindest einem Oberflächenabschnitt (3) des Wälzlagers (1) mindestens eine zweite elektrisch isolierende Schicht (15) aufgebracht wird, auf der eine mindestens zweite elektrisch leitfähige und strukturierte Schicht (17) vorgesehen wird, und dass
die erste elektrisch isolierende Schicht (5) an mindestens einer Stelle (19), bis auf ein Oberflächenabschnitt (4), der mindestens zweiten elektrisch leitfähigen Schicht (17) strukturiert wird, so dass mindestens eine elektrische Kontaktierung (21) vorgesehen ist, durch die die mindestens zweite elektrisch leitfähige Schicht (17) mit mindestens einer elektrischer Leiterbahn (9) bzw. einer Kontaktstelle (11) der ersten leitfähigen Schicht (7) verbunden wird.

4. Herstellungsverfahren nach Anspruch 3, wobei die erste elektrisch isolierende Schicht (5) und die erste elektrisch leitfähige Schicht (7) mittels einer elektrostatischen Pulverbeschichtung aufgebracht werden.

5. Herstellungsverfahren nach Anspruch 3 oder 4, wobei über die Kontaktstellen (11) der Leiterbahnen (9) der ersten Leitschicht (7) passive elektrische Bauelemente (6a) und/oder elektronische Bauelemente (6b) befestigt werden.

## Claims

1. A rolling bearing (1) comprising an electrical circuit (10),
wherein a first electrically insulating layer (5) is applied directly to at least one surface section (3) of the rolling bearing (1), wherein the surface section (3) of the rolling bearing (1) is formed from an electrically conductive material, wherein a first electrically conductive layer (7) is provided over the first electrically insulating layer (5) and forms a plurality of conductor tracks (9) with contact points (11) for making electrical contact with electrical components (6a, 6b),
**characterised in that**
at least one second electrically insulating layer (15) is applied directly to the at least one surface section (3) of the rolling bearing (1) and carries at least one second electrically conductive and structured layer (17) on which the first electrically insulating layer (5) and the first electrically conductive layer (7) with the conductor tracks (9) and the contact points (11) are applied, and that
the first electrically insulating layer (5) is structured at at least one point (19), apart from a surface section (4) of the at least second electrically conductive layer (17), and at least one electrical contact (21) is provided, which connects the at least second electrically conductive layer (17) with at least one electrical conductor track (9) or a contact point (11) of the first conductive layer (7).

2. The rolling bearing (1) according to claim 1, wherein the electrical components are passive electrical components (6a) and/or electronic components (6b).

3. A method of manufacturing an electrical circuit (10) on at least one surface section (3) of a rolling bearing (1), wherein the surface section (3) of the rolling bearing (1) is formed from an electrically conductive material,
comprising the following steps:
• forming a first electrically insulating layer (5) on the surface section (3) of the rolling bearing (1);
• forming a first electrically conductive layer (7) on the first electrically insulating layer (5);
• structuring the first electrically conductive layer (7) so that conductor tracks (9) are formed in the first electrically conductive layer (7); and
• forming contact points (11) on the conductor tracks (9)
**characterised in that**
before the first electrically insulating layer (5) and the first electrically conductive layer (7) are formed, at least one second electrically insulating layer (15) is applied to at least one surface section (3) of the rolling bearing (1), on which an at least second electrically conductive and structured layer (17) is provided, and that
the first electrically insulating layer (5) is structured at at least one point (19), apart from a surface section (4), of the at least second electrically conductive layer (17), so that at least one electrical contact (21) is provided, through which the at least second electrically conductive layer (17) is connected to at least one electrical conductor track (9) or a contact point (11) of the first conductive layer (7).

4. A manufacturing method according to claim 3, wherein the first electrically insulating layer (5) and the first electrically conductive layer (7) are applied by means of an electrostatic powder coating.

5. The manufacturing method according to claim 3 or 4, wherein passive electrical components (6a) and/or electronic components (6b) are attached via the contact points (11) of the conductor tracks (9) of the first conductive layer (7).

## Revendications

1. Palier à roulement (1), comprenant un circuit électrique (10),
une première couche électro-isolante (5) étant appliquée directement sur au moins une section de surface (3) du palier à roulement (1), la section de surface (3) du palier à roulement (1) étant formée d'un matériau électro-conducteur, une première couche électro-conductrice (7) étant prévue sur la première couche électro-isolante (5) et comportant une pluralité de pistes conductrices (9) avec des points de contact (11) destinés à venir en contact électrique avec des composants électriques (6a, 6b),
**caractérisé en ce qu'**
au moins une seconde couche électro-isolante (15) est appliquée directement sur ladite section de surface (3) du palier à roulement (1) et porte au moins une seconde couche électro-conductrice et structurée (17) sur laquelle sont appliquées la première couche électro-isolante (5) et la première couche électro-conductrice (7) pourvues des pistes conductrices (9) et des points de contact (11) et **en ce que**
la première couche électro-isolante (5) est structurée en au moins un point (19), jusqu'à une section de surface (4) de ladite seconde couche électro-conductrice (17) et au moins un contact électrique (21) sert à relier ladite seconde couche électro-conductrice (17) à au moins une piste conductrice électrique (9) ou à un point de contact (11) de la première couche conductrice (7).

2. Palier à roulement (1) selon la revendication 1, les composants électriques étant des composants électriques passifs (6a) et/ou des composants électroniques (6b).

3. Procédé de fabrication d'un circuit électrique (10) sur au moins une section de surface (3) d'un palier à roulement (1), la section de surface (3) du palier à roulement (1) étant formée d'un matériau électro-conducteur,
comprenant les étapes suivantes :
• formation d'une première couche électro-isolante (5) sur la section de surface (3) du palier à roulement (1) ;
• formation d'une première couche électro-conductrice (7) sur la première couche électro-isolante (5) ;
• structuration de la première couche électro-conductrice (7) de sorte que des pistes conductrices (9) soient formées dans la première couche électro-conductrice (7) ; et
• formation de points de contact (11) sur les pistes conductrices (9)
**caractérisé en ce qu'**
avant la formation de la première couche électro-isolante (5) et de la première couche électro-conductrice (7) sur au moins une section de surface (3) du palier à roulement (1) est appliquée au moins une seconde couche électro-isolante (15) sur laquelle est disposée ladite seconde couche électro-conductrice et structurée (17) et **en ce que**
la première couche électro-isolante (5) est structurée en au moins un point (19), jusqu'à une section de surface (4) de ladite seconde couche électro-conductrice (17), de sorte qu'au moins un contact électrique (21) serve à relier ladite seconde couche électro-conductrice (17) à au moins une piste conductrice électrique (9) ou à un point de contact (11) de la première couche conductrice (7).

4. Procédé de fabrication selon la revendication 3, la première couche électro-isolante (5) et la première couche électro-conductrice (7) étant appliquées par un revêtement électrostatique par pulvérisation.

5. Procédé de fabrication selon la revendication 3 ou 4, des composants électriques passifs (6a) et/ou des composants électroniques (6b) étant fixés par l'intermédiaire des points de contact (11) des pistes conductrices (9) de la première couche conductrice (7).
